# EUROPEAN PATENT APPLICATION

(11) **EP 0 601 833 A2**
(43) Date of publication of application: **15.06.1994**
(21) Application number: 93309823.8
(22) Date of filing: 07.12.1993
(51) Int. Cl.: H02M 7/08, H02M 7/06

(54) **Improvement to capacitive coupled power supplies**

(30) Priority: 08.12.1992 US 986927
(71) Applicant: HUGHES AIRCRAFT COMPANY, Los Angeles, California 94304 (US); CALIFORNIA INSTITUTE OF TECHNOLOGY, Pasadena California 91125 (US)
(72) Inventor: Vollin, Jeffrey L., West Hills, California 91304 (US); Tan, Dong, Pasadena, California 91106 (US)
(74) Representative: Colgan, Stephen James

(57) **Abstract**

A rectifying power supply having an AC current source (11, 211, 311) operating at a frequency of at least 100 KHz, a plurality of capacitors (12, 14, 19, 21, 25, 27, 31, 33, 217, 219, 223, 225, 229, 231, 317, 319, 323, 325, 329, 331) responsive to the AC current output of the AC current source for providing DC isolation and for providing capacitively coupled AC currents, and a plurality of AC current to DC voltage rectifying circuits (17, 23, 29, 35, 221, 227, 233, 331, 327, 333). The outputs of the rectifying circuits are coupled in series or in parallel.

## Description

### BACKGROUND OF THE INVENTION

The disclosed invention is generally directed to rectifying power supplies, and is more particularly directed to a high frequency rectifying power supply which does not utilize a complex transformer.

Rectifying power supplies are utilized in certain applications where the required supply voltage is DC. The originating power source may provide an AC voltage or a DC voltage. With a DC voltage supply, stepping the voltage up or down requires conversion of the DC power to AC power which may be accomplished, for example, with a square wave converter or a sinewave converter. The AC voltage is then stepped up or down, as required, by a transformer and then rectified.

Significant improvements in the size and weight of rectifying power supplies have been made by increasing the operating frequency of the AC power. Particularly, higher operating frequencies allow for significantly smaller capacitive elements. However, with increased AC operating frequencies, transformer isolation is reduced, reflections increase, and core losses increase. As a result of problems encountered with increased frequencies, different transformer designs have been made in attempts to allow for higher AC operating frequency operation. Such designs, however, are complex and generally require time-consuming and costly development for particular applications. Moreover, transformers tend to be the cause of the majority of power supply failures.

A further consideration in the implementation of high frequency power supplies is the power handling limits of available diodes. If the number of secondary windings is reduced in attempting to make transformers smaller and less complex, then the power limits of available diodes may be exceeded. If more secondary windings are used to accommodate the power limits of available diodes, then transformer complexity and size increase.

Another consideration in the implementation of high frequency power supplies is the use of inductors which are lossy and expensive.

### SUMMARY OF THE INVENTION

It would therefore be an advantage to provide a high frequency rectifying power supply which does not utilize a complex and bulky transformer.

Another advantage would be to provide a rectifying power supply that has a reduced number of inductors.

The foregoing and other advantages are provided by the invention in a power supply which includes an AC current source operating at a frequency of at least 100 KHz, a plurality capacitors responsive to the AC power for providing DC isolation and for providing capacitively coupled AC power, and a plurality of AC current to DC voltage rectifying circuits that are responsive to the capacitively coupled AC power for providing respective DC output voltages.

### BRIEF DESCRIPTION OF THE DRAWINGS

The advantages and features of the disclosed invention will readily be appreciated by persons skilled in the art from the following detailed description when read in conjunction with the drawing wherein:

FIG. 1 is a block diagram of a rectifying power supply in accordance with the invention wherein the outputs of the power supply AC current to DC voltage rectifier/filter modules are serially coupled.

FIG. 2 is a schematic diagram of an AC current to DC voltage rectifier/filter module that can be utilized in the power supply of FIG. 1 and in the power supplies of FIGS. 5 and 6.

FIG. 3 is a schematic diagram of a further AC current to DC voltage rectifier/filter module that can be utilized in the power supply of FIG. 1 and in the power supplies of FIGS. 5 and 6.

FIG. 4 is a schematic diagram of a further AC current to DC voltage rectifier/filter module that can be utilized in the power supply of FIG. 1 and in the power supplies of FIGS. 5 and 6.

FIG. 5 is a block diagram of a further rectifying power supply in accordance with the invention.

FIG. 6 is a block diagram of another rectifying power supply in accordance with the invention.

### DETAILED DESCRIPTION OF THE DISCLOSURE

In the following detailed description and in the several figures of the drawing, like elements are identified with like reference numerals.

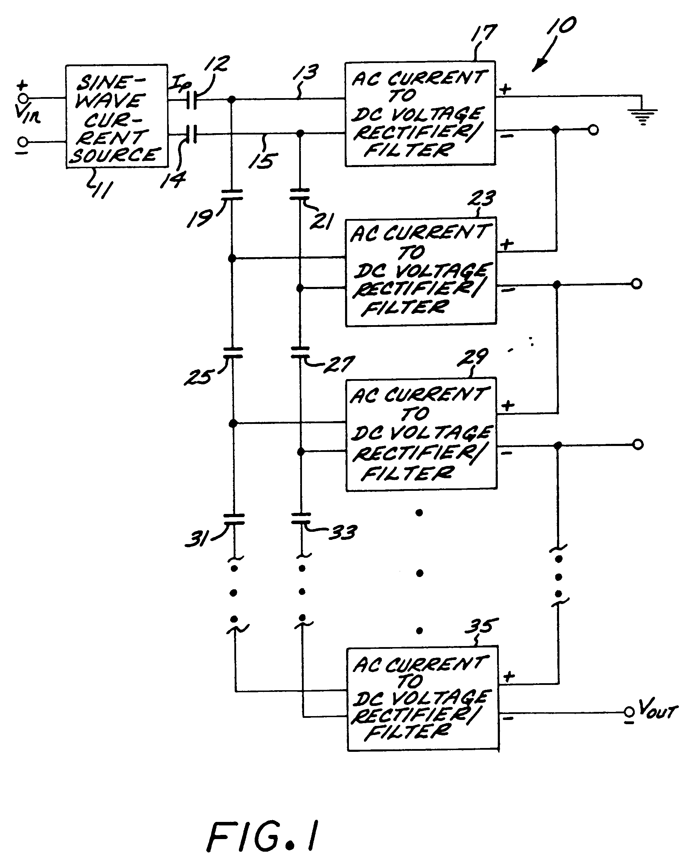

Referring now to FIG. 1, illustrated therein is a high frequency rectifying power supply 10 which includes a sinewave current source 11 that is responsive to a DC supply voltage Vᵢₙ and provides an alternating current output having a frequency of at least 100 KHz. The sinewave current source 11 can comprise known circuitry for converting a DC voltage to an AC current that varies sinusoidally. Alternatively, a square wave current source may also be utilized.

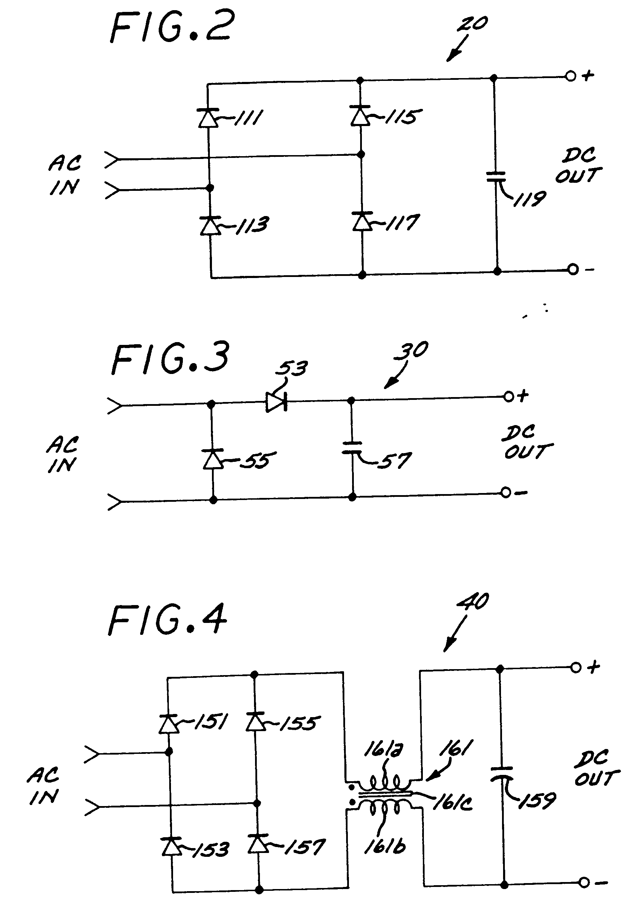

The current output of the sinewave current source 11 has a peak amplitude denoted Iₚ and is provided on AC output lines 13, 15. A pair of coupling capacitors 12, 14 have their first terminals connected to the output lines 13, 15, and their second terminals connected to the AC input of an AC current to DC voltage rectifier/filter module 17. Illustrative examples of circuitry that could be utilized to implement the AC current to DC voltage rectifier/filter module 17, as well as the other AC current to DC voltage rectifier/filter modules in the power supplies disclosed herein, are discussed further herein conjunction with FIGS. 2 - 4. The invention employs AC current to DC voltage rectifier/filter modules for compatibility with the AC current source in order to reduce diode loss that would otherwise be greater if an AC voltage to DC voltage rectifier modules were utilized. Briefly, an AC current to DC voltage rectifier/filter module avoids the effect of series inductors by avoiding the use of inductors or by including a common mode or coupled inductor which has no DC flux in its core.

The second terminals of the coupling capacitors 12, 14 are further connected to the first terminals of further coupling capacitors 19, 21 which have their second terminals connected to the AC input of an AC current to DC voltage rectifier/filter module 23, which may be of the same circuit structure as the AC current to DC voltage rectifier/filter module 17.

The second terminals of the coupling capacitors 19, 21 are further connected to the first terminals of coupling capacitors 25, 27 which have their second terminals connected to the AC input of an AC current to DC voltage rectifier/filter module 29, which may be of the same circuit structure as the AC current to DC voltage rectifier/filter modules 17, 23 discussed above.

The second terminals of the coupling capacitors 25, 27 are further coupled to the further coupling capacitors 31, 33 which have their second terminals connected to an associated AC current to DC voltage rectifier/filter module (not shown).

As shown in FIG. 1, N AC current to DC voltage rectifier/filter modules may be utilized, the AC current to DC voltage rectifier/filter module 35 being the N^{th} module, with all of the AC current to DC voltage rectifier/filter modules having associated coupling capacitors. In essence, a pair of coupling capacitors is associated with each of the AC current to DC voltage rectifier/filter modules and the pairs of coupling capacitors are serially connected such that the AC current to DC voltage rectifier modules are connected at the nodes between pairs of capacitors, except for the last AC current to DC voltage rectifier/filter module which is connected to the second terminals of the coupling capacitor pair that is last in the series.

As also shown in FIG. 1, the outputs of the AC current to DC voltage rectifier/filter modules are connected serially to provide a maximum output voltage that is the sum of the respective output voltages. As discussed further below with respect to FIGS. 2 and 3, the DC voltage outputs of the AC current to DC voltage rectifier/filter modules can be across respective output filter capacitors, and with such structure, the output capacitors of the AC current to DC voltage rectifier/filter modules would be serially connected. As indicated in FIG. 1, the first terminal of the output capacitor of the AC current to DC voltage rectifier/filter module 17 is coupled to a common reference potential, which may be considered ground, and all output voltages are with respect to that common reference potential. The second terminal of the output capacitor of the AC current to DC voltage rectifier/filter module 17 is connected to the first terminal of the output capacitor of the AC current to DC voltage rectifier/filter module 23, and so forth. The second terminal of the N^{th} AC current to DC voltage rectifier/filter module 35 provides a high voltage output which is the sum of the outputs of all of the AC current to DC voltage rectifier/filter modules. The outputs respectively provided by the other rectifier/filter modules should be readily evident.

Assuming small losses in the coupling capacitors, the sinewave current source will need to provide a peak to peak voltage that is approximately 1/N times the DC load voltage V_{OUT}.

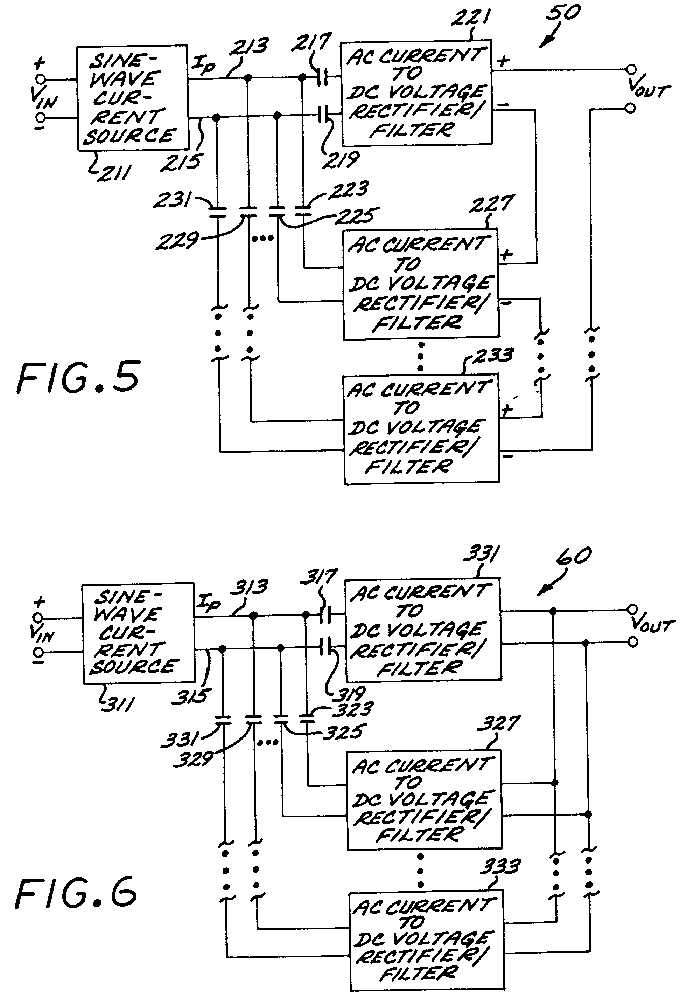

It should be noted that the increase in the equivalent series resistance of the coupling capacitors provides a limit on the number of rectifier/filter modules that can be utilized in the power supply 10. For example, for an AC operating frequency greater than 1 MHz and an input voltage of 200 volts, it has been determined that 20-30 rectifier/filter modules appears to be a reasonable upper limit with the circuit structure of the FIG. 1. A greater number may result in unacceptable open loop regulation, while in a closed loop system the variation would have to be absorbed in the dynamic range of the power supply 10. Further, high equivalent series resistance results in high power dissipation, which results in shorter component lifetimes. An alternate configuration that addresses these considerations is discussed further herein relative to FIG. 5.

Referring now to FIG. 2, illustrated therein is a schematic of an AC current to DC voltage rectifier/filter module 20 which may be implemented as each of the rectifier/filter modules in the power supply 10 of FIG. 1, as well as in the other power supplies disclosed herein. Specifically, the AC current to DC voltage rectifier/filter module 20 includes a first pair of serially connected diodes 111, 113, wherein the anode of the diode 111 is connected to the cathode of the diode 113. A second pair of serially connected diodes 115, 117 is connected in parallel with the first serially connected diode pair, wherein the anode of the diode 115 is connected to the cathode of the diode 117, and the cathodes of the diodes 111, 115 are connected together and the anodes of the diodes 113, 117 are connected together. A smoothing capacitor 119 is connected between the commonly connected cathodes of the diodes 111, 115 and the commonly connected anodes of the diodes 113, 117. The node between the serially connected diodes 111, 113 and the node between the serially connected diodes 115, 117 comprise the AC input to the AC current to DC voltage rectifier/filter module 20, while the DC voltage output of the AC current to DC voltage rectifier/filter module 20 is across the smoothing capacitor 119.

FIG. 3 schematically illustrates a further AC current to DC voltage rectifier/filter module 30 which may be implemented as each of the filter modules in the power supply 10 of FIG. 1, as well as in the other power supplies disclosed herein. The AC current to DC voltage rectifier/filter module includes a pair of serially connected diodes 53, 55, wherein the anode of the diode 53 is connected to the cathode of the diode 55. A smoothing output capacitor 57 is connected between the cathode of the diode 53 and the anode of the diode 55. The node between the diodes and the node at the anode of the diode 55 comprise the AC input to the AC current to DC voltage rectifier/filter module 30 while the DC voltage output of the module 30 is across the output capacitor 57.

FIG. 4 schematically illustrates another AC current to DC voltage rectifier/filter module 40 which may be implemented as each of the filter modules in the power supply 10 of FIG. 1, as well as in the other power supplies disclosed herein. The AC current to DC voltage rectifier/filter module of FIG. 4 includes a first pair of serially connected diodes 151, 153, wherein the anode of the diode 151 is connected to the cathode of the diode 153. A second pair of serially connected diodes 155, 157 is connected in parallel with the first serially connected diode pair, wherein the anode of the diode 155 is connected to the cathode of the diode 157, and the cathodes of the diodes 151, 155 are connected together and the anodes of the diodes 153, 157 are connected together. The dotted terminal of the first winding 161a of a common mode inductor 161 having first and second coupled windings 161a, 161b wound on a common core 161c is connected to the commonly connected cathodes of the diodes 151, 155; and the dotted terminal of the second winding 161b of the common mode inductor 161 is connected to the commonly connected anodes of the diodes 153, 157. The non-dotted terminal of the first coupled winding 161a is connected to one terminal of a smoothing capacitor 159, while the non-dotted terminal of the second coupled winding 161b is connected to the other terminal of the smoothing capacitor 159. The node between the serially connected diodes 151, 153 and the node between the serially connected diodes 155, 157 comprise the AC input to the AC current to DC voltage rectifier/filter module 40 of FIG. 4, while the DC voltage output of the AC current to DC voltage rectifier/filter module 40 is across the smoothing capacitor 159.

It should be noted that the common mode inductor 161 comprises coupled windings 161a, 161b wound on a common core, and is connected with a polarity such that no DC flux is produced in the core and the rectifier module 40 operates as an AC current to DC voltage rectifier/filter module. In particular, as indicated by the polarity dots, any current that flows to the DC output through one winding of the common mode inductor returns through the other winding, whereby there is no DC flux in the core. If a differential mode inductor having two windings wound on a single core were substituted for the common mode inductor 161, then the module would have an LC filter characteristic and would be an AC voltage to DC voltage converter, which as discussed above is subject to higher diode losses. In addition, the DC current in a differential mode inductor would require a larger core since the currents would produce a DC flux in the core. In the common mode inductor 161 of the module of FIG. 4, there is no DC flux in the core and thus can be made very small. Substitution of two separate inductors for the common mode inductor 161 would present similar problems as the substitution of a differential mode inductor.

The purpose of the common mode inductor 161 is to isolate the smoothing capacitor 159 from the ripple voltage present at the AC input to the AC current to DC voltage rectifier module 40 of FIG. 4, and further resists any tendency for any common-mode-currents to flow out of the module. This is important when several AC current to DC voltage rectifier/filter modules in accordance with FIG. 4 are series-connected to form a high voltage converter. By resisting any common-mode currents, each module is guaranteed to share the current provided by the source of AC current to the different modules. In the absence of the common mode inductor 161, the lowest voltage module in a the series connected modules will draw current first in a short pulse, then the second lowest voltage will draw a pulse of current, and so forth. The common mode inductor 161 insures that each module draws current for the entire cycle of the AC input current.

Referring now to FIG. 5, schematically depicted therein is a high voltage rectifying power supply 50 in accordance with the invention that includes a sinewave current source 211 which is responsive to a DC input voltage Vᵢₙ and provides an alternating current output having a frequency of at least 100 KHz. The sinewave current source 211 can comprise known circuitry for converting a DC voltage to an AC current that varies sinusoidally. Alternatively, a square wave current source may also be utilized.

The current output of the sinewave current source 211 has a peak amplitude denoted Iₚ and is provided on output lines 213, 215. The first terminals of coupling capacitors 217, 219 are connected to the sinewave current source output lines 213, 215. The second terminals of the capacitors 217, 219 are connected to the input of an AC current to DC voltage rectifier/filter module 211 that can be implemented, for example, in the form of one of the AC current to DC voltage rectifier/filter modules shown in FIGS. 2-4, discussed above.

The first terminals of coupling capacitors 223, 225 are respectively connected to the output lines 213, 215 of the sinewave current source 211. The second terminals of the coupling capacitors 223, 225 are connected to the AC input of an AC current to DC voltage rectifier/filter module 227 that can be implemented, for example, in the form of one of the AC current to DC voltage rectifier/filter modules shown in FIGS. 2-4, discussed above.

Further AC current to DC voltage rectifier/filter modules and associated coupling capacitors can be connected to the output lines 213, 215 as illustrated by the N^{th} pair of coupling capacitors 229, 231 and the associated N^{th} AC current to DC voltage rectifier/filter module 233.

In the high voltage rectifying power supply 50 of FIG. 5, each of the AC current to DC voltage rectifier/filter modules is coupled to the output of the sinewave source 211 via respective coupling capacitors which are connected to the output lines 213, 215.

The outputs of the AC current to DC voltage rectifier/filter modules 221, 227, 233 are connected in series to provide an output load voltage Vₒᵤₜ. Again assuming small losses in the coupling capacitors, the sinewave current source will need to provide a peak to peak voltage is approximately equal to 1/N times the DC load voltage V_{OUT}. Since the coupling capacitors in the power supply 50 are not serially coupled as to each other, a greater number of AC current to DC voltage rectifier/filter modules can be utilized with the power supply 50 of FIG. 5 than with the power supply 10 of FIG. 1.

Referring now to FIG. 6 shown therein is a rectifying power supply 60 which may be utilized to provide lower voltages with high current. Specifically, power supply 40 is similar to the power supply 50 of FIG. 5, except that the outputs of the AC current to DC voltage rectifier/filter modules of the power supply 60 are connected in parallel, and the sinewave current source will need to provide a peak to peak voltage that is approximately equal to the DC output load voltage V_{OUT}. The available current will be high as a result of the parallel configuration of the outputs of the AC current to DC voltage rectifier/filter modules.

The following are examples of operating parameters and component values for the power supply 10 of FIG. 1, where the Fₛ is the frequency of the output of the sinewave current source 11 which has a peak voltage Iₚ:
Vᵢₙ: 300 Volts
Iₚ: 1.6 A
Fₛ: 1 MHz
Vₒᵤₜ: 1,875 Volts
Total Power: 375 Watts
Capacitors 19, 21, 25, 27, 31, 33: .022 µF
Diodes 111, 113, 115, 117: Type SPD524, Solid States Devices, La Mirada, California
Filter Capacitor 119: .1 µF
Number of AC current to DC voltaae rectifier/filter modules: 5

While the foregoing power supply structures have been discussed as stand-alone circuits, it should be readily appreciated that they can comprise modular building blocks which can be connected in series or parallel to achieve the desired voltage and/or current outputs.

The foregoing has been a disclosure of a rectifying power supply structure which eliminates the need for an expensive and complex transformer, operates at frequencies of at least 100 KHz, reduces the use of inductors, and achieves reduced diode loss by driving the rectifying diodes with a current source. Other advantages provided by the invention include uncomplicated design with predictable response, adaptability for a modular structure, adaptability for use as compact, inexpensive building blocks, which reduces cost in both development and manufacturing. Further advantages of the invention include low stored energy in the power supply, and faster open loop response for regulated power supply applications. Still further advantages includes reduced size and weight, and increased efficiency and reliability. Finally, since the limitations of high voltage transformers do not come into play, the disclosed invention allows for AC operating frequencies substantially higher than what is presently practical.

Although the foregoing has been a description and illustration of specific embodiments of the invention, various modifications and changes thereto can be made by persons skilled in the art without departing from the scope and spirit of the invention as defined by the following claims.

## Claims

1. A power supply comprising:
current source means for providing an AC current at a frequency of at least 100 KHz;
capacitive coupling means responsive to said AC current for providing capacitively coupled AC currents; and
a plurality of AC current to DC voltage converting means respectively responsive to said capacitively coupled AC currents for providing respective rectified DC voltages.

2. The power supply of Claim 1 wherein each of said AC current to DC voltage converting means comprises:
rectifying means responsive to a respective capacitively coupled AC current; and
filtering means exclusive of inductors responsive to said rectifying means for providing the rectified DC output of the AC current to DC voltage converting means.

3. The power supply of Claim 1 wherein each of said AC current to DC voltage converting means comprises:
rectifying means responsive to a respective capacitively coupled AC current;
a common mode inductor responsive to said rectifying means; and
filtering means exclusive of inductors responsive to said common mode inductor for providing the rectified DC output of the AC current to DC voltage converting means.

4. A power supply comprising:
current source means for providing an AC current at a frequency of at least 100 KHz;
capacitive coupling means responsive to said AC current for providing capacitively coupled AC currents without inductors or resistors; and
a plurality of AC current to DC voltage rectifying means respectively responsive to said capacitively coupled AC currents for providing respective rectified DC output voltages.

5. The power supply of Claim 4 wherein each of said AC current to DC voltage converting means comprises:
rectifying means responsive to a respective capacitively coupled AC current; and
filtering means exclusive of inductors responsive to said rectifying means for providing the rectified DC output of the AC current to DC voltage converting means.

6. The power supply of Claim 4 wherein each of said AC current to DC voltage converting means comprises:
rectifying means responsive to a respective capacitively coupled AC current;
a common mode inductor responsive to said rectifying means; and
filtering means exclusive of inductors responsive to said common mode inductor for providing the rectified DC output of the AC current to DC voltage converting means.
